# EUROPEAN PATENT APPLICATION

(11) **EP 4 273 971 A1**
(43) Date of publication of application: **08.11.2023**
(21) Application number: 21915938.1
(22) Date of filing: 29.12.2021
(51) Int. Cl.: H01M 8/0232, H01M 8/0252, H01M 4/92

(54) **TUBULAR SOLID OXIDE FUEL CELL WITH A CATHODE COLLECTOR AND METHOD FOR FORMING SAME**

(30) Priority: 30.12.2020 RU 2020144070
(71) Applicant: "TOPAZ" LIMITED LIABILITY COMPANY ("TOPAZ" LLC), Moscow, 121205 (RU)
(72) Inventor: GVOZDKOV, Ilya Alekseevich, Mytishchinskiy r-n, 141031 (RU); LEVCHENKO, Egor Aleksandrovich, Chernogolovka, 142432 (RU); SIVAK, Aleksandr Vladimirovich, Vidnoe, 142700 (RU); TIMERBULATOV, Ruslan Sergeevich, Moscow, 109316 (RU)
(74) Representative: Osmans, Voldemars
(86) International application number: PCT/RU2021/000618
(87) International publication number: WO 2022/146188

(57) **Abstract**

The invention relates to the field of electrical engineering, namely, to high-temperature solid oxide fuel cells (SOFCs) of a tubular structure with an anode supporting electrode, in particular to microtubular SOFCs, and is intended to create single tubular SOFCs with an efficient cathode current collector for subsequent switching of fuel cells in a battery. The cathode current collector is made of a material based on metal powder and/or powder of metal oxides and/or intermetallic compounds, in the form of at least one strip deposited on the surface of the outer side of the cathode electrode, or on the inner side of the cathode electrode facing the electrolyte, wherein, the current collector isinseparably connected to the surface on which it is applied, and has a porous structure with a volumetric porosity of 10-70%. A method for forming the cathode collector of tubular SOFC is proposed, which includes the preparation of a composition based on metal powder and/or powder of metal oxides and/or intermetallic compounds with a particle size of 0.5-50 mcm, which is applied to the surface of the cathode electrode in the form of strips or to the surface adjacent to layer facing the cathode electrode, after which annealing is carried out at the sintering temperature of the cathode electrode.

## Description

The invention relates to electrochemical current sources, specifically to high-temperature solid oxide fuel cells (SOFC) of tubular design with an anode supporting electrode, more specifically to microtubular SOFCs, and is intended to create a single tubular SOFC with an efficient cathode current collector for further switching of fuel cells in the bank.

Tubular and microtubular SOFCs are paid much attention since this design, as compared to planar SOFCs, simplifies the cell sealing action in the bank, reduces material consumption because metallic bipolar plates are not used, and significantly reduces the time for bank heating to the operating temperature from several hours to several minutes. However, tubular SOFCs have issues related with arrangement of efficient current collectors on electrodes of cells and switching of cells in the bank since the current propagation pathways are significantly increased. For the considered tubular SOFCs with an anode supporting electrode, this issue requires searching a method to arrange efficient cathode current collector, which is the aim of this invention.

There are methods to arrange cathode current collectors for tubular solid oxide fuel cells consisting in winding a wire on the cathode surface. The patent US 7887975 proposes using a copper wire with a corrosion-resistant coating, and the patent US 9190672 proposes using a silver or nickel wire. The main disadvantage of these methods lies in technological complexity of wire winding on fragile thin-wall tubular SOFCs. The contact area of the wire and the SOFC cylindrical surface is a thin line, which determines high contact resistance and low efficiency of current collection.

The patent US 8343689 proposes a method to arrange current collectors similar to the above but using a wire made of gold, platinum and palladium - precious metals with a melting point above 1000°C. Apart from technological complexity of wire winding on tubular SOFCs of small diameter, using a wire from precious metals is expensive and unacceptable for large-scale industrial use.

There is a design of tubular SOFCs with an anode interconnector running to the cathode area (US 2003148160). The current collection and cell switching are implemented by metallic connector plates. The known solution significantly complicates the design and manufacturing technology of tubular SOFCs since it is required to form a segmented electrolyte layer on the anode supporting electrode and to apply a gas-dense interconnector layer in the anode area not covered by the electrolyte. It is also necessary to ensure electric insulation of the interconnector from the cathode electrode.

There are methods to arrange cathode current collectors by a porous matrix made of a material with an electronic and mixed electronic-ionic conductivity where single tubular SOFCs are placed (US 7736772, US2009214919). The authors propose making a porous matrix from cathode materials (strontium lanthanum manganate), sponges of stainless steel, Ni or Cu ceramets, silver alloys and other high-temperature materials. A disadvantage of these methods is their high material consumption, which makes them inefficient in terms of industrial use and commercialization.

The technical effect of this invention is increased efficiency of the design by reducing materials consumption and reducing electrical losses, increased specific power of single tubular SOFCs, and simplified process of manufacturing single elements.

This technical effect is achieved by a tubular solid oxide fuel cell that includes an anode electrode, electrolyte, a cathode electrode with a cathode current collector, whereas the cathode current collector is made of a material based on metallic powder and/or powder of metal oxides and/or intermetallides in the form of at least one band applied over the surface on the external side of the cathode electrode or on the inner side of the cathode electrode oriented to electrolyte. The cathode collector band has a porous structure with the volumetric porosity of 10-70% and is integrally connected to the surface it is applied over.

The band (current conductive bus) is electrically and mechanically connected to the cathode electrode.

As a basis for the material of the cathode current collector for SOFCs, a material based on metallic powder is usually selected with a melting point above the SOFC operating temperature, such as an alloy of silver or other precious metals with platinum and/or palladium, which reduces the degradation rate of the current collector. A binder and/or a dispersant can be used as additives along sintering additives that improve adhesion and sintering behavior of metallic powder particles with the structural layer of the cathode electrode. In this application, the cathode electrode structure includes functional layers (buffer, barrier, etc.), if any, located between electrolyte and the cathode electrode including the cathode electrode layer. Intermetallides are used with predominantly high electronic conductivity.

The current collector is located on the SOFC along the cathode electrode along a straight line or spiral in the form of a continuous band, for example. The current collector can be also made as rings with bridges between them.

A powder with an average particle size of 0.5-50 µm is used as a basis for the cathode current collector material.

The method of forming a cathode current collector of a tubular SOFC consists in that a composition is made based on a metallic powder and/or powder of metal oxides and/or intermetallides with an average particle size of 0.5-50 µm that is, in the form of at least one band, applied over the surface (external or internal) of the cathode electrode or the surface of its adjacent cathode layer oriented to the cathode electrode, or applied together with the cathode electrode; the tubular SOFC together with the applied current collector is then subject to annealing at the cathode electrode sintering temperature (about 900-1200°C).

The composition based on the metallic powder and/or powder of metal oxides and/or intermetallides may include sintering additives based on titanium, tungsten, copper, vanadium, manganese or bismuth compounds.

The composition may represent a paste containing a binder and/or a dispersant.

The volumetric ratio of the powder and the binder in the paste may be 2:1 to 3:1 and the volumetric share of the dispersant in the paste is usually 0.5% to 3%.

The paste is applied by extrusion using a syringe with a flexible tip with a beveled open end.

As compared to the known technical solutions, the proposed solution makes it possible to improve the efficiency of a tubular SOFC by using a cathode current collector as described above, namely as a band made of a material of certain composition and applied in a certain manner, by means of reducing the materials consumption, reducing electrical losses in the cathode electrode, increasing the specific power and simplifying the process of applying the cathode current collector and, therefore, the process of manufacturing a tubular SOFC in general.

In this manner, it is the combination of essential feature reflected in the claims, more specifically, in independent claims, that helps achieving the technical effect given above.

The claimed invention is illustrated by graphic materials.

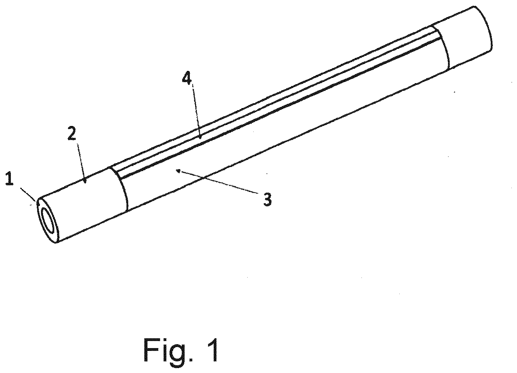

Fig. 1 gives the schematic design of a tubular SOFC with a cathode current electrode.
Fig. 2 gives a diagram of applying bands of the cathode current electrode (current conductive buses) on tubular SOFCs.
Fig. 3 gives a photomicrograph of a cross-section of a tubular SOFC with a cathode current electrode.
Fig. 4 gives voltage-current and power-current curves of single tubular SOFC with and without a cathode current electrode, operating temperature of 750°C, hydrogen flow rate of 240 ml/min, air flow rate of 480 ml/min.

According to the claimed invention, apart from basic components such as anode tubular electrode 1, solid electrolyte 2 and cathode electrode 3, the tubular SOFC contains cathode current collector 4 representing one or several predominantly longitudinal current conducting buses.

The design of the tubular SOFC with an anode supporting electrode suggests a cathode current collector consisting of at least one longitudinal current conducting bus sintered on the surface of the cathode electrode. To simplify the process of manufacturing single tubular SOFC, cathode current collectors (buses) are evenly applied in the form a continuous band on the surface of the cathode electrode or one of the cathode layers. The bands are made of a material based on metallic powder and/or powder of metal oxides and/or intermetallides. Usually, the material includes also a binder and a dispersant. In the preferable embodiment, sintering additives are additionally injected and a paste is made for band application. The application process is automated.

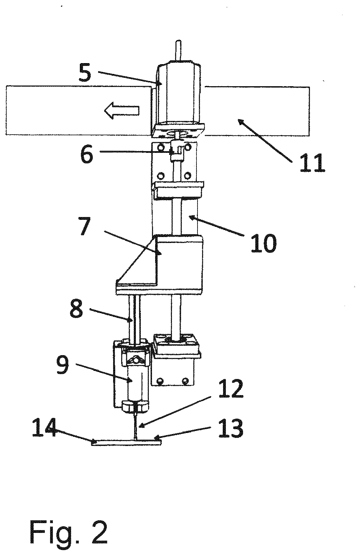

The diagram of applying current conducting buses on the surface of the cathode electrode is given in Fig. 2. In this scheme, step motor 5 rotates spiral shaft 6 where push rod 7 is secured, which makes piston 8 to move in a smooth and controlled manner to extrude the paste by syringe 9. All these elements are secured on bracket 10 that moves on platform 11. The paste is extruded through flexible spout 12 as current conducting band 13 on the surface of the cathode electrode of tubular SOFC 14.

The current collector (bus) is usually applied on the outer surface of the cathode electrode. The current collector can be also located on the inner side of the cathode electrode: directly on the inner surface of the cathode electrode or on the surface of the adjacent layer. This layer can be solid electrolyte or one of the cathode functional layers (buffer, barrier). It is also possible to jointly apply a material of the current collector with the material of the cathode electrode, such as simultaneous spraying from two nozzles one of which forms a bus, while the other one forms the cathode electrode structure.

The cathode current collector is integrally connected to the surface it is applied over. Such joint connection is ensured because the applied cathode collector is sintered, during annealing, with the layer it is placed over or with layers it is placed between.

The cathode current collector in the form of a current conducting bus in the preferable embodiment consists of a silver alloy with platinum or palladium with a silver content of 50 to 95%. Silver is a material having high electrical conductivity and satisfactory oxidation resistance but it is characterized by high predisposition to migration and evaporation at SOFC operating temperatures of 700-850°C, which can lead to SOFC degradation in case of long-term operation. Therefore, silver alloys with platinum and palladium are used in manufacturing of current conducting buses to stabilize silver and increased melt point of the alloy.

The cathode current collector material can represent a paste applied in a thin, preferably even layer before annealing.

In certain embodiments, the cathode current collector may represent a rod or a soft tape made of paste or power with a binder.

For better sintering and prevention of further lamination of the cathode current collector in operation of tubular SOFCs within an electrochemical generator (ECG), the material of the cathode collector may include sintering additives such as TiH₂, CuO, Bi₂O₃, V₂O₅, WO₃, MnO, etc.

In one of the preferable embodiments, the current collector band is applied over the cathode collector surface with a material in the form of a paste containing a powder of silver alloy with palladium, a binder and a dispersant. The silver alloy powder is characterized by average particle size of 0.8 to 15 µm. Glycerin, terpineole, ethylene glycol, toluene, solutions of polyvinylbutyral and methyl cellulose and similar carriers can be used as the binder. Dispersant agents such as DISPERBYK-111 can be used as a dispersant. To improve adhesion in sintering of the current conducting band of the cathode electrode with a porous ceramic cathode electrode, a sintering additive is injected to the paste. The volumetric ratio of the silver alloy powder and binder in the paste is 2:1 to 3:1. The volumetric share of the dispersant is 0.5 to 3%. The weight fraction of the sintering additive is 0.5-2.5% of the silver alloy powder weight in the paste. The components for the paste are homogeneously mixed, for example, in a centrifugal mixer or ball mill, the paste is then degassed. The prepared paste is charged to a syringe for applying a band (current conducting bus) of a cathode current collector.

The band of the cathode current collector (current conducting bus) is applied over the surface of the cathode electrode of tubular SOFCs by extrusion of the paste from the syringe and moving the syringe along the longitudinal axis of the tubular SOFC, while the syringe tip can be flexible to compensate differences in height from the cathode electrode surface to the syringe needle defined by the tubular SOFC surface irregularity. In its turn, the bevel of the flexible tip forms the clearance height for feeding paste of 0.2 to 0.5 mm.

It is possible to apply the cathode collector band by silk screen printing or dipping a small surface along the generatrix of a tubular SOFC into the paste. When applying a band, the paste touches the surface of the tubular SOFC cathode electrode.

At least one cathode collector (current conducting bus) is applied over each tubular SOFC. The number of current conducting bands (buses) depends on the tubular SOFC diameter. The optimal distance between cathode collectors on each tubular SOFC measured long the arc between cathode collectors in the SOFC cross-section is usually 3 to 10 mm.

After applying a cathode current collector band (current conducting bus), tubular SOFCs are annealed for sintering of cathode current collectors at 900 to 1200°C.

According to this invention, it is possible to apply current conducting buses on the non-sintered cathode electrode and further sinter the cathode electrode and the cathode current collector. The sintering takes place at a cathode electrode sintering temperature of 900-1200°C.

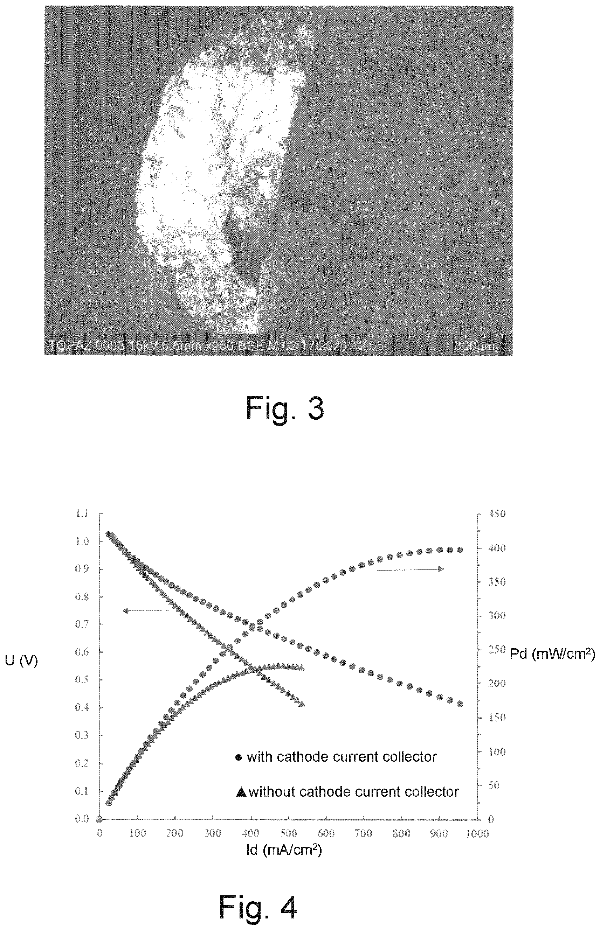

The sintered current collector in the manufactured specimen according to this invention has a thickness of 0.1 to 0.5 mm, a width of 0.5 to 2.0 m, and porosity of 10 to 70% (Fig. 3). High porosity of current conducting buses compensates difference in thermal-expansion coefficient of the materials of the cathode electrode and the current collector, which is necessary to prevent lamination of the current collector in operation of tubular SOFCs within an electrochemical generator (ECG) and achieve high ECG heating and cooling rates, and also ensures gas permeability of the oxidizer (oxygen) to the cathode electrode surface.

The cathode current collector ensures efficient distribution of current density along the entire surface of the cathode electrode and reduces ohmic losses in current distribution along the cathode electrode, which ensures a fold increase in specific characteristics of tubular SOFCs (Fig. 4).

In this manner, the claimed technical solution increases efficiency of the design by reducing materials consumption and electrical losses, increases specific power of single tubular SOFCs, and simplifies the process of manufacturing single elements.

## Claims

1. A tubular solid oxide fuel cell (SOFC) including an anode electrode, electrolyte, a cathode electrode with a cathode current collector, whereas the cathode current collector is made of a material based on metallic powder and/or powder of metal oxides and/or intermetallides in the form of at least one band applied over the surface on the external side of the cathode electrode or on the inner side of the cathode electrode oriented to electrolyte whereas the current collector is integrally connected to the surface it is applied over and has a porous structure with the volumetric porosity of 10-70%.

2. The tubular SOFC in accordance with claim 1 **characterized in that** a silver alloy with platinum and/or palladium is used as a basis for the cathode collector material.

3. The tubular SOFC in accordance with claim 1 **characterized in that** the powder used as a basis for the cathode collector material has an average particle size of 0.5-50 µm.

4. The tubular SOFC in accordance with any of the claims 1-3 **characterized in that** the used material comprises sintering additives.

5. The tubular SOFC in accordance with claim 1 **characterized in that** the current collector is located along the cathode electrode.

6. A method of forming a cathode current collector of a tubular SOFC consisting in that a composition is made based on a metallic powder and/or powder of metal oxides and/or intermetallides with a particle size of 0.5-50 µm that is, in the form of at least one band, applied over the surface of the cathode electrode or the surface of its adjacent layer oriented to the cathode electrode, or applied together with the cathode electrode, the tubular SOFC together with the applied current collector is then subject to annealing at the cathode electrode sintering temperature.

7. The method in accordance with claim 6 **characterized in that** the composition includes sintering additives based on titanium, tungsten, copper, vanadium, manganese or bismuth compounds.

8. The method in accordance with any of the claims 6, 7 **characterized in that** the composition represents a paste containing a binder and/or a dispersant.

9. The method in accordance with claim 8 **characterized in that** the volumetric ratio of the powder and the binder in the paste is 2:1 to 3:1 and the volumetric share of the dispersant in the paste is 0.5% to 3%.

10. The method in accordance with claim 8 **characterized in that** the paste is applied by extrusion using a syringe with a flexible tip with a beveled open end.
